# EUROPEAN PATENT SPECIFICATION

(11) **EP 1 192 773 B1**
(45) Date of publication and mention of the grant of the patent: **11.04.2012**
(21) Application number: 00941810.4
(22) Date of filing: 11.07.2000
(51) Int. Cl.: H04L 12/66, H04L 29/08

(54) **METHOD AND SYSTEM FOR EXCHANGING INFORMATION BETWEEN MULTIMEDIA NETWORK NODES**
VERFAHREN UND SYSTEM FÜR DEN INFORMATIONSAUSTAUSCH ZWISCHEN MULTIMEDIA-NETZKNOTEN
PROCEDE ET SYSTEME D'ECHANGE D'INFORMATIONS ENTRE DES NOEUDS D'UN RESEAU MULTIMEDIA

(30) Priority: 12.07.1999 AU PQ156499; 14.07.1999 AU PQ162599
(43) Date of publication of application: 03.04.2002
(73) Proprietor: Telefonaktiebolaget LM Ericsson (publ), 164 83 Stockholm (SE)
(72) Inventor: GRAF, Leslie, Gary, Balwyn, VIC 3103 (AU); GROVES, Christian, Norman, Keilor, VIC 3036 (AU); HOLLIS, Mark, Alan, Park Orchards, VIC 3114 (AU); NOGUERA-RODRIGUEZ, Juan, Essendon, VIC 3040 (AU); TERRILL, Stephen, Christopher, S-112 32 Stockholm (SE)
(74) Representative: HOFFMANN EITLE
(86) International application number: PCT/AU2000/000840
(87) International publication number: WO 2001/005109

(56) References cited:
- EP-A- 0 841 831
- WO-A-00/22792
- WO-A-98/57485
- WO-A-99/34555
- US-A- 5 644 715
- CHRISTIAN HUITEMA, JANE CAMERON, PETROS MOUCHTARIS, DAREK SMYRK: "An architecture for residential Internet telephony service" INTERNET COMPUTING, May 1999 (1999-05), pages 73-82, XP002328518 COMPUTER ORG
- C. HUITEMA ET AL.: 'An architecture for residential internet telephony service' IEEE INTERNET COMPUTING vol. 33, no. 3, May 1999 - June 1999, pages 73 - 82, XP002901126
- "draft-ieft-megaco-R2 Package-00.txt", 25 June 1999, BAJAJ et al. XP015022852

## Description

### FIELD OF INVENTION

The present invention relates to the interworking of networks, particularly to the interworking of information through telecommunication networks. In one form, the present invention relates to the interworking of multimedia networks and telecommunication networks based on SS7 Common Channel Signalling.

The present invention relates generally to the transmission of video, audio and/or data signals between nodes in multimedia networks, and in particular to the exchange of control information, in the form of capabilities information, between such nodes. The invention is suitable for use in the negotiation of the capabilities of nodes, notably in H.323 and SIP multimedia networks, to transmit out-going information streams and receive and process in-coming information streams, and it will be convenient to hereinafter describe the invention in relation to that exemplary application. It is to be appreciated, however, that the invention is not limited to use in that application, only.

### BACKGROUND OF INVENTION

Multimedia networks are networks such as those based on H.323, ITU-T H.323, Packet Based Multimedia Communication Systems, and SIP, IETF RFC 2543 Session Initiation Protocol, and have the ability to negotiate capabilities between nodes.

In the context of the present specification, the expression "nodes" is intended to refer to endpoint terminals for receiving and transmitting user information, this also includes network nodes and servers which handle the switching of such information in the network and gateways between adjacent networks. The capability exchange procedures of multimedia networks are intended to ensure that the only multimedia signals to be transmitted are those which can be received and treated appropriately by the receiving node, by making the capabilities of each node to transmit, receive and decode information streams known to the other node or nodes.

H.323 multimedia networks therefor use a protocol called H.245, ITU-T H.245, Control Protocol for Multimedia Communication, which uses OpenLogicalChannel and / or TerminalCapability messages / structures to exchange information between H.323 endpoints or nodes about the capabilities supported by the nodes.

Similarly, SIP (Session Initiation Protocol) is defined by the Internet Engineering Task Force (IETF). Part of the SIP multimedia architecture is the Session description protocol (SDP), IETF RFC 2327 Session Description Protocol. It is used to negotiate a set of capabilities between SIP endpoints or nodes (SIP server, SIP client etc).

The following is an example of the capabilities information that is able to be negotiated by multimedia negotiation protocols:
Audio (define type and direction - send, receive, send & receive)
Video (define type and direction - send, receive, send & receive)
Data (define type and direction - send, receive, send & receive)
Encryption
Conference
Security

Once this negotiation has taken place the user data is transported between the nodes in the format specified by this negotiation. This negotiation can take place at any time. For example, call setup, within an established session etc.

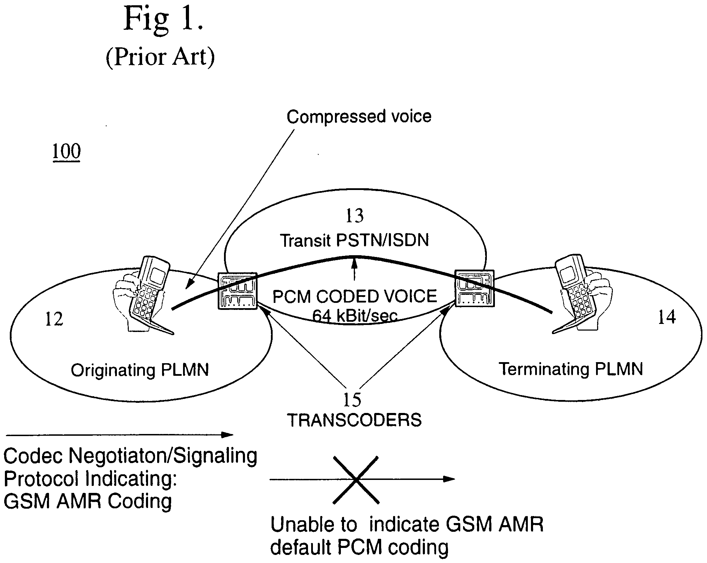

Another example of negotiation between nodes, but which differs from the above multimedia negotiation, is in modern communication networks which include mobile nodes or endpoints. Figure 1 illustrates a communication system 100 including third generation Public Land Mobile Networks (PLMNs) 12, 14 and also a fixed transit network (PSTN/ISDN) 13. The PLMNs 12, 14 are capable of operating with compressed voice streams in their core networks. This is voice stream coding which is asynchronous or synchronous in nature, and transmitted and / or received at bit rates in the range typically of 8 - 16 kbit/s. In discussing the transmission of the compressed voice streams between mobile nodes, we have now turned our attention, for the purposes of illustrating the prior art, to the lower physical and access layer protocols unrelated to the higher layer protocols of the multimedia networks discussed above.

PSTN/ISDN networks 13 usually operate with synchronous 64kbit/s PCM coded voice streams, which occupies a 64kbit/s time slot. If a call originating in a PLMN 12, 14 traverses a PSTN/ISDN network 13, in other words, the voice stream passes from a PLMN network 12 to a PSTN/ISDN network 13, to a terminating PLMN 14, the voice stream is transcoded from its compressed format to a synchronous PCM coded format and then again transcoded back to its compressed format. This is because there is no ability to negotiate or signal the use of another codec type or bandwidth through the PSTN/ISDN or SS7 based network 13. This is exemplified in Figure 1, where the PSTN/ISDN network 13 is unable to allow an indication of GSM AMR and thus a default PCM coding is required. Transcoding is then necessary. Flowing from this, any gains in bandwidth efficiency on the mobile side are lost because the use of transcoding between codec formats reduces the quality of the original user data. Transcoding should thus be avoided where possible.

With the introduction of Mobile telecommunications networks compressed voice was brought to the edge of the 'fixed' telecommunications networks. The user plane data in a mobile network is encoded by codecs producing compressed voice. For example: GSM AMR and EFR coding. As a result, a smaller 'pipe' supporting less bandwidth is needed.

The result is that, a network given the same amount of bandwidth can handle more calls.

However, when a fixed telecommunications network interfaces with a mobile network, the compressed voice must be transcoded from the compressed format to the PCM format of the fixed network.

To alleviate the problem of codec negotiation between mobile nodes where calls traverse a PSTN/ISDN network a solution has been posed where in band signalling is used to negotiate codecs when interfacing PSTN/ISDN networks based on SS7 technology. A developed protocol called Tandem Free Operation TFO, ETSI GSM 08.62 allows mobile network nodes to signal and negotiate the type of codec and thus the bandwidth through the network(s) via in band communication. This also alleviated the need for transcoding which would lead to the degradation of quality of the original user plane data.

Nonetheless, there is still a problem as yet unresolved of when Multimedia networks (e.g. H.323 and SIP) are interfaced with a Telecommunications networks based on SS7 in that they experience a similar problem as that associated with mobile networks separated by a PCM network as described above and in that, unlike mobile/PCM network interfaces that cannot negotiate codecs, the multimedia networks cannot negotiate capabilities between nodes when sessions traverse PCM networks.

For example, the information signalled in the multimedia compatibility protocols such as H.323 and SDP is lost because the SS7 protocols cannot carry this information. As such a node / server / gateway / media gateway is forced to transcode the user data leaving to a degradation in quality.

Another deficiency in prior art systems arises where the amount of capabilities information required to be transmitted in the negotiations for multimedia sessions is too large for the TFO frames that convey codec information in mobile/fixed network interfaces.

Although in the case of PLMN/PCM network interfaces the TFO solution has allowed the negotiation of codecs, it has been found that the present form of the in band codec negotiation in PLMN/PCM interfaces does not cater for the type and amount of information required to be transported for negotiating capabilities of multimedia nodes in sessions across a PSTN/ISDN PCM network.

From Christian Huitema, Jane Cameron, Petros Mouchtaris, Darek Smyrk: "An architecture for residential Internet telephony service" Internet Computing; May 1999 (1999-05), pages 73-82, a network architecture is known, wherein call agents use a media gateway control protocol to control residential gateway between telephones and the Internet and trunking gateways between the Internet and the PSTN.

It is an object of the invention to provide a method and system for exchanging capabilities information between nodes in multimedia networks across a fixed or switched telecommunications network which ameliorates or overcomes one or more disadvantages of the prior art.

It is a further object of the invention to enable nodes in multimedia networks to exchange capabilities information across a fixed or switched telecommunications network.

### SUMMARY OF INVENTION

The present invention provides a method of enabling multimedia information to pass between a first network based on a first technology and a second network based on a second technology, by enabling the first and / or second networks to apply a method of inband capability negotiation or signalling including logically mapping multimedia capabilities information to in band messages in order to establish the format for the passing of the multimedia information from the first network to the second network.

Preferably, the inband messages are TFO (Tandem Free Operation) messages.

Preferably, the multimedia information is further passed from the second network to a third network based on the first technology or a third technology, and in which the step of applying inband capability negotiation is effected to the multimedia information passing from the second to the third network.

Preferably, the multimedia information is user plane information, such as compressed audio stream.

The present invention also provides a communication system having a first network based on a first technology, a second network based on a second technology, and interface means enabling the first and second networks to apply an inband methodology including logically mapping multimedia capabilities information to in band messages in order to signal and / or negotiate the passing of multimedia information from the first network to the second network.

Preferably, the inband messages are TFO (Tandem Free Operation) messages.

Preferably, the system further includes a third network based on the first technology or a third technology, and interface means applying TFO to the multimedia capabilities information transferred from the second to the third network.

Preferably, the networks may be one or more of PLMN network, multimedia network or SS7 based network.

In essence, having realised that the problem lies in the present form of in band codec negotiation for mobile/fixed SS7 network interfaces being unsuitable for negotiating capabilities of multimedia sessions across fixed SS7 networks, the invention stems from addressing this by logically mapping multimedia capabilities information to in band messages. The messages, in turn, provide communication channels for conveying capabilities information inside a multimedia path between respective nodes. One step in the present invention was realising that existing TFO frame sizes and structures were not large enough to transport all the information needed for multimedia network capabilities negotiation.

In other words, the present invention overcomes the disadvantages of the prior art use of the TFO protocol by logically mapping the multimedia capabilities information to existing in band messages. By "logically mapping" we mean mapping the multimedia capabilities information to a TFO message format and then embedding the TFO message in successive TFO frames and/or existing PCM samples of one or more 64 kBits/sec links in the PSTN/ISDN network by bit stealing from the successive frames and/or PCM samples.

As TFO provides a means of inband capability negotiation when interfacing with mobile networks, the present invention, in one preferred form, seeks to extend the use of TFO to the interface between multimedia networks (i.e. H.323, SIP) and Telecommunications based on SS7.

Throughout this specification, by 'information' we mean data, voice, video and / or any other form of information electronically transmissible. A preferred form of the invention relates to the transmission of audio or voice streams.

In this specification, a multimedia network is a network that through the use of Call / Session control and / or capability negotiation allows for the control and transport of different types of media, including but not limited to, audio, video, data or different types of transport in data, fixed and mobile. For example H.323, , SIP based multimedia networks.

In one form, the present invention can reside in an interface between a multimedia network and a traditional telecommunications network which uses inband signalling.

One aspect of the present invention provides a method for exchanging capabilities information between a first node in a first multimedia network and a second node in a second multimedia network, said first and second multimedia networks being separated by a fixed or switched telecommunications transit network across which capabilities information between said first and second nodes is transported, the method including the steps of:
transmitting from said first multimedia network to said fixed or switched telecommunications network a control message containing capabilities information intended to govern the operation of said second node,
at the interface between said first multimedia network and said fixed or switched telecommunications network, mapping said capabilities information into an inband signalling message for transport in a bearer channel within said fixed or switched telecommunications network, and
at the interface between said fixed or switched telecommunications network and said second multimedia network, removing said capabilities information from within said inband signalling message for transmission to said second node.

In this way, the exchange of control messages between nodes in the first and second multimedia networks, which enable notably the end-to-end negotiation of capabilities, is able to be carried out through traditional telecommunications networks, such as those based on SS7 and new telecommunications networks based on call control not being tied to underlying user plane transport, such as the Bearer Independent Call Control (BICC) network. The use of transcoders can thus be eliminated, resulting in better speech quality and more efficient use of resources in the networks.

Preferably, the inband signalling message conforms to the GSM Tandem Free Operation (TFO) inband signalling protocol. The inband signalling message may be a TFO Message.

In one embodiment, the capabilities information includes information characterising the capabilities of one or more of said nodes to transmit or receive information streams.

The operation of at least one of said first and second multimedia networks may be based on ITU-T Recommendation H.323. Alternatively, the operation of at least one of said first and second multimedia networks may be based on the IETF RFC 2543 Session Initiation Protocol.

The operation of the fixed or switched telecommunications network may be based on the ITU-T Signalling System No. 7 Recommendation.

Another aspect of the invention provides a system for exchanging capabilities information between a first node in a first multimedia network and a second node in a second multimedia network, said first and second multimedia networks being separated by a fixed or switched telecommunications transit network across which capabilities information between said first and second nodes is transported, the system including:
means for transmitting a control message containing capabilities information, intended to govern the operation of said second node, from said first multimedia network to said fixed or switched telecommunications network,
means for mapping said capabilities information, at an interface between said first multimedia network and said fixed or switched telecommunications network, into an inband signalling message for transport in a bearer channel within said fixed or switched telecommunications network, and
means for removing said capabilities information, at the interface between said fixed or switched telecommunications network and said second multimedia network, from within said inband signalling message for transmission to said second node.

The capabilities information mapping and removing means may be provided by one or more gateways, media gateways, rate adaptor units or interworking units interconnecting said first and second multimedia networks to said fixed or switched telecommunications network.

The following description refers in more detail to the various features of the present invention. To facilitate an understanding of the invention, reference is made in the description to the accompanying drawings where the method and system of exchanging capabilities information between nodes in multimedia networks is illustrated in a preferred embodiment. It is to be understood that the invention is not limited to this preferred embodiment.

In the drawings:
Figure 1 is a schematic diagram of two PLMN mobile networks, which are interconnected by a PSTN/ISDN fixed transit network;
Figure 2 is a schematic diagram of two multimedia networks, based respectively on the H.323 and SIP standards, which are interconnected by a PSTN/ISDN transit network;
Figure 3 illustrates a TFO frame used to transport user information from one multimedia network in Figure 2 to the other across the PSTN/ISDN transit network;
Figure 4 illustrates the insertion of the TFO frame of Figure 3 into 8 bit PCM samples transmitted in the PSTN/ISDN network of Figure 2;
Figure 5 illustrates a TFO message used for the inband signalling of capabilities information from one multimedia network in Figure 2 to the other across the PSTN/ISDN transit network; and
Figure 6 illustrates part of the capabilities negotiation process between endpoints in the two multimedia networks of Figure 2 across the PSTN/ISDN network.

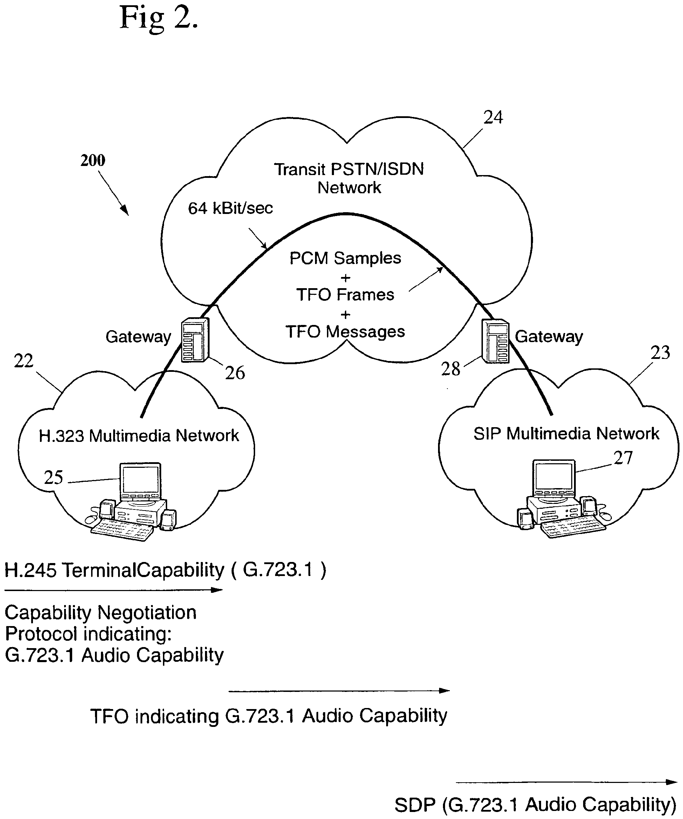

Referring now to Figure 2, there is shown generally a telecommunications system 200 including a first multimedia network 22, a second multimedia network 23 and a PSTN/ISDN network 24. The PSTN/ISDN network 24 is a switched network developed for the transmission of voice traffic, whereas both multimedia networks 22 and 23 are designed for the transmission of video, audio and data information streams between nodes 25, 27 within each network rather than to generally support telephone services. It is to be understood that the operation of multimedia networks 22 and 23 may be based upon the same or different recommendations or modes of operation.

In this example, the operation of the first multimedia network 22 is based upon ITU-T Recommendation H.323, which describes terminals, equipment and services for multimedia communications (voice, video and data) over Local Area Networks (LANs/WANs) which may provide guaranteed Quality of Service (QoS). The H.323 network 22 includes a plurality of H.323 terminals, such as that referenced 25 in Figure 1. The H.323 terminal 25 is an endpoint on the local area network 22 which provides for real-time, two way communications with another H.323 terminal, Gateway, or Multipoint Control Unit. This communication consists of control, indications, audio, moving colour video pictures, and/or data between the two of the aforementioned network nodes 25, 27. A node may provide speech only, speech and data, speech and video, or speech, data and video. An H.323 Gateway 26 is provided as an endpoint on the local area network 26, and provides for real-time, two-way communication between the H.323 terminals on the LAN 26 and other ITU nodes forming part of the ISDN/PSTN network 24.

Similarly, the SIP multimedia network 23 includes a plurality of SIP terminals, such as that referenced 27 in Figure 1. The SIP terminal 27 is an endpoint within the SIP network 23. The SIP Protocol is an application-layer control (signalling) protocol which enables the creation, modification and termination of sessions between one or more nodes within the SIP network 23. These sessions include multimedia conferences, Internet telephone calls and multimedia distribution. A SIP Gateway 28 interconnects the SIP network 23 and the PSTN/ISDN network 24 in order to enable real-time, two-way communication between the SIP terminals in the SIP network 23 and ITU nodes forming part of the ISDN/PSTN network 24.

Terminals within the H.323 network 22 use the ITU-T Recommendation H.245 to exchange information messages as well as procedures to use them for inband negotiation at the start or during communication between two or more such terminals. The messages cover receiving and transmitting capabilities as well as mode preference from the receiving terminal, logical channel signalling, and Control and Indication. Acknowledged signalling procedures are specified to ensure reliable audiovisual and data communication. H.245 information is exchanged between H.323 terminals on a control channel established for the duration of the communication between the terminals.

Terminals within the SIP network 23 use SDP to exchange similar information messages. SDP describes multimedia sessions between two or more terminals and is used to convey session announcement, session invitation and other forms of multimedia session initiation. A common mode of usage is for a multimedia session to be announced by the periodic multicasting of an announcement packet, which consists of a Session Announcement Protocol (SAP) header and text payload describing the multimedia session.

User information is conveyed in the PSTN/ISDN network 24 in 64 kBits/sec links. However, in order to enable one or more nodes in the H.323 network 22 to exchange multimedia information with one or more nodes in the SIP network 23, capabilities information intended to govern the operation of one or more of such nodes during a multimedia session is transported across the network 24 as an inband signalling message within the 64 kBits/sec link. The inband signalling message may conform to the GSM TFO inband signalling protocol. Although this protocol was developed to enable mobile-to-mobile calls to be made in GSM networks without requiring tandem coding to be carried out on the speech signal, it has surprisingly been found to be suitable for use in the context of the present invention.

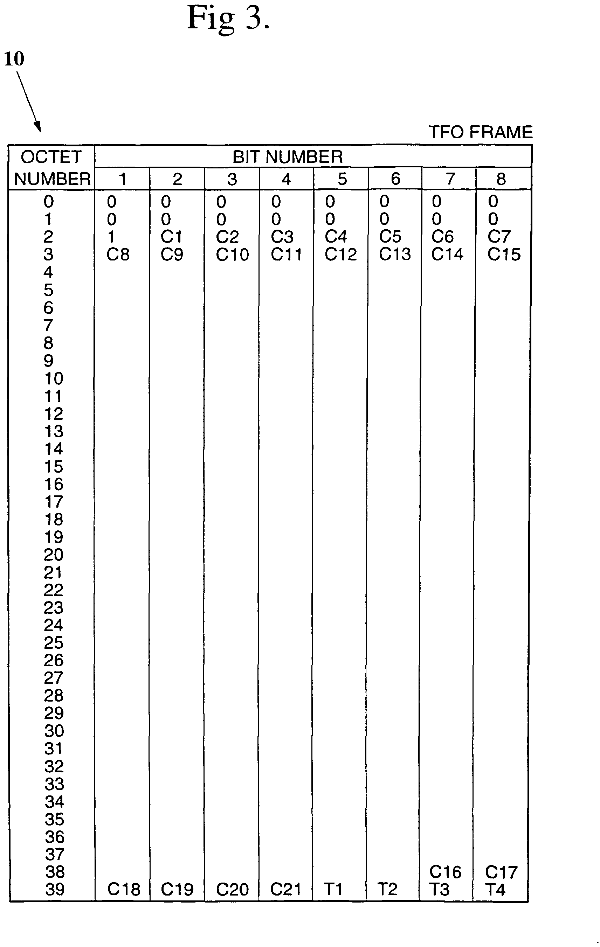

Multimedia voice, audio and/or data signals are transported across the PSTN/ISDN network 24 in TFO Frames, an example of which is shown in Figure 3. TFO Frames have a fixed size and length depending on the codec used by the endpoints in each of the multimedia networks 22 and 23. In the TFO Frame 10 of Figure 3, the frame length is 320 bits. The TFO frame 10 includes synchronisation bits in the first two octets, and 21 control bits C1 to C21 which enclose the information payload borne by the Frame. It will be appreciated that the Frame structure shown in this Figure is illustrative only, and that various other Frame structures may be easily conceived by a skilled person in the telecommunications field.

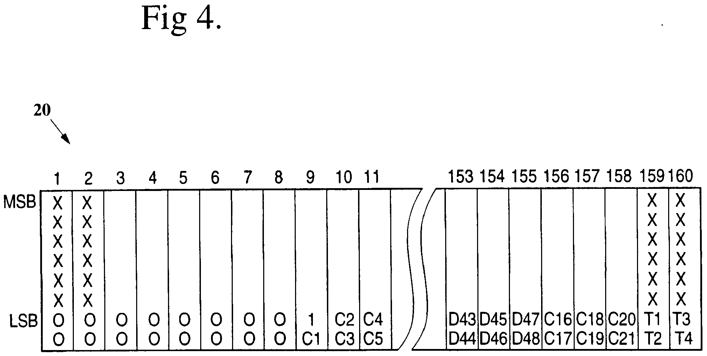

The TFO Frame 10 may be carried by a channel mapped onto one or more bits of the PCM samples of one or more 64 kBits/sec links in the PSTN/ISDN network 24. The number of bits occupied will depend upon the transmission rate of the multimedia information stream transported across the PSTN/ISDN network 24. For example, if the multimedia information stream is transported at a rate of 16 kBits/sec, the TFO Frame 10 may be mapped onto the two least significant bits of the PCM samples, as shown by the PCM sample stream 20 represented in Figure 4.

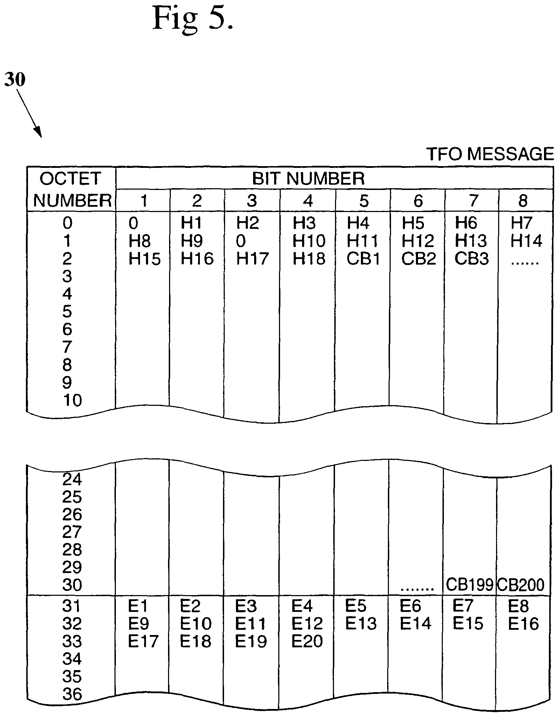

TFO Messages are transmitted on the same 64 kBits/sec link prior and parallel to the TFO Frames. TFO Messages, an example of which is shown in Figure 5, provide communication channels for conveying capabilities information inside the multimedia information path between respective endpoints in the multimedia networks 22 and 23. The TFO message 30 of Figure 5 includes a header, a command block and possibly one or more extension blocks. The header, in this example, consists of a 20-bit long sequence H1 to H18 (including two "0" bits). The command block, referenced CB1 to CB200, identifies the capabilities information sent between multimedia nodes across the PSTN/ISDN network 24. Extension blocks, here referenced E1 to E20, extend the size of the command block of the TFO message 30.

The TFO message 30 may be transported on the 64 kBits/sec link by being sent together with (embedded into) a TFO Frame 10, or by being inserted into the PCM sample stream 20. In this latter case, the TFO Message 30 may be transferred within the LSB of the PCM sample stream 20 by replacing every 16^{th} consecutive PCM sample with one bit of the TFO Message.

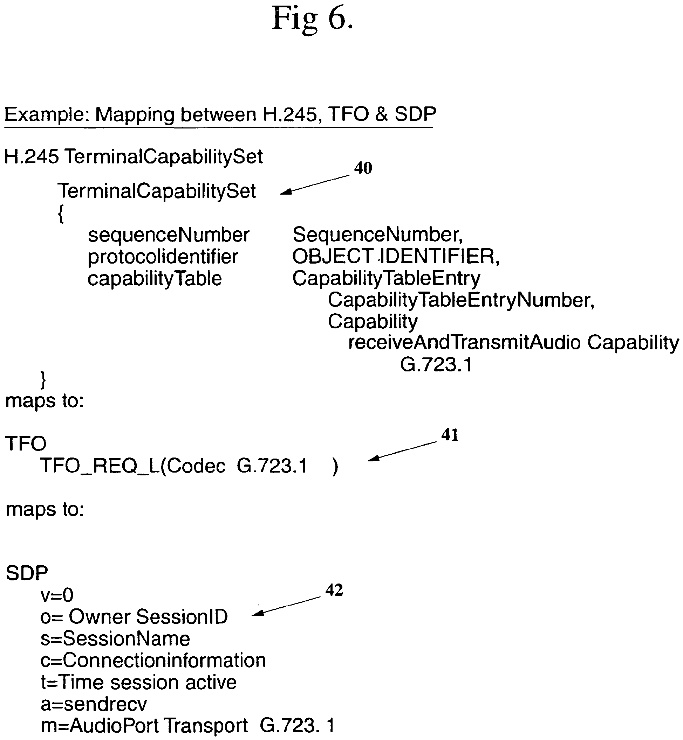

An example of the exchanging of capabilities information between the H.323 endpoint 25 in the H.323 network 22 and the SIP endpoint 27 in the SIP network 23 will now be described with reference to Figure 6. Prior to the establishment of a multimedia session between the endpoints 25 and 27, the endpoint 25 may act to ensure that the endpoint 27 is able to receive and appropriately process the video, audio and/or data information stream it intends transmitting to the endpoint 27. In this case, the endpoint 25 transmits a TerminalCapabilitySet 40 containing information about its capability to transmit and receive. The TerminalCapabilitySet 40 includes a sequenceNumber to label the particular instance of the TerminalCapabilitySet so that a corresponding response from the endpoint 27 can be identified, a protocolldentifier to indicate the version of the H.245 Recommendation in use, and a CapabilityTableEntry describing, in this case, the capability of the endpoint 25 to send and receive audio using G.723.1 encryption.

The TerminalCapabilitySet 40 is conveyed across the H.323 network 22 to the H.323 gateway 26, which acts to map the TerminalCapabilitySet 40 into a TFO Message 41. The TFO Message 41 has the structure TFO_REQ_L (Codec G7231), indicating that the source of the message is a TFO capable device and that the G.723.1 Audio Codec is the codec used at the endpoint 25. The TFO Message 41 is then transmitted as an inband message within a 64 kBits/sec link across the PSTN/ISDN network 24.

Upon receipt by the SIP Gateway 28, the information contained in the TFO Message 41 is removed and mapped into a SAP Message 42. Accordingly, the protocol version, OwnerSessionlD, SessionName and ConnectionInformation are created and placed in a SAP message intended for the endpoint 27. Moreover, information from the TFO Message 41 is able to be mapped into the TimeSessionActive field, the SessionDescription field - sendrecv (corresponding to the receiveAndTransmitAudioCapability transmitted in the H.245 Message 40) - and the MediaAnnoucements field - Audio PORT Transport G7231 (corresponding to the G7231 Audio transmitted in the H.245 Message 40).

The present invention allows for the end to end negotiation of capabilities through traditional telecommunication networks based on SS7 and new telecommunications networks based on Bearer Independent Call Control (BICC). Those skilled in the art will appreciate that there may be many other variations, modifications and/or additions to the configuration described herein which are within the scope of the present invention.

## Claims

1. A method for exchanging capabilities information between a first node (25) in a first multimedia network (22) and a second node (27) in a second multimedia network (23), said first (22) and second (23) multimedia networks being separated by a circuit switched telecommunications transit network (24) across which capabilities information between said first (25) and second (27) nodes is transported, the method comprising:
transmitting from said first multimedia network (22) to said circuit switched telecommunications network (24) a control message containing capabilities information intended to govern the operation of said second node (27), **characterized by** :
at an interface (26) between said first multimedia network (22) and said circuit switched telecommunications network (24), mapping said capabilities information into an inband signalling message for transport in a bearer channel within said circuit switched telecommunications network (24), and
at an interface (28) between said circuit switched telecommunications network (24) and said second multimedia network (23), removing said capabilities information from within said inband signalling message for transmission to said second node (27).

2. A method as claimed in claim 1 wherein the circuit switched telecommunications network (24) is based on SS7.

3. A method as claimed in claim 1 wherein the circuit switched telecommunications network (24) is based on call control not being tied to underlying user plane transport, such as a Bearer Independent Call Control (BICC) network.

4. Method as claimed in claim 2 wherein the inband signalling message conforms to the GSM Tandem Free Operation (TFO) inband signalling protocol.

5. A method as claimed in claim 4 wherein the inband signalling message is a TFO Message.

6. A method as claimed in claim 1 wherein the capabilities information includes information characterizing the capabilities of one or more of said nodes (25, 27) to transmit or receive information streams.

7. A method as claimed in claim 1 wherein the operation of at least one of said first (22) and second (23) multimedia networks is based an ITU-T Recommendation H323.

8. A method as claimed claim 1 wherein the operation of at least one of said first (22) and second (23) multimedia networks is based on the IETF RFC 2543 Session Initiation Protocol.

9. A system (200) for exchanging capabilities information between a first node (25) in a first multimedia network (22) and a second node (27) in a second multimedia network (23), said first (22) and second (23) multimedia networks being separated by a circuit switched telecommunications transit network (24) across which capabilities information between said first (25) and second (27) nodes is transported, the system (200) comprising:
means for transmitting a control message containing capabilities information, intended to govern the operation of said second node (27), from said first multimedia network (22) to said circuit switched telecommunications network (24), **characterized by** :
means for mapping said capabilities information, at an interface (26) between said first multimedia network (22) and said circuit switched telecommunications network (24), into an inband signalling message for transport in a bearer channel within said circuit switched telecommunications network (24), and
means for removing said capabilities information, at the interface (28) between said circuit switched telecommunications network (24) and said second multimedia network (23), from within said inband signalling message for transmission to said second node (27).

10. A system as claimed in claim 9 wherein the capabilities information mapping and removing means is provided by one or more gateways (26, 28), media gateways, rate adaptor units, or interworking units interconnecting said first (22) and second (23) multimedia networks to said circuit switched telecommunications network (24).

## Patentansprüche

1. Verfahren zum Austauschen von Fähigkeiteninformation zwischen einem ersten Knoten (25) in einem ersten Multimedianetzwerk (22) und einem zweiten Knoten (27) in einem zweiten Multimedianetzwerk (23), wobei die ersten (22) und zweiten (23) Multimedianetzwerke durch ein leitungsvermitteltes
Telekommunikationstransitnetzwerk (24) getrennt sind, über welches Fähigkeiteninformation zwischen den ersten (25) und zweiten (27) Knoten transportiert wird, wobei das Verfahren umfasst:
ein Übertragen, von dem ersten Multimedianetzwerk (22) zu dem leitungsvermittelten Telekommunikationsnetzwerk (24), einer Steuerungsnachricht, die Fähigkeiteninformation enthält, die dafür vorgesehen ist, den Betrieb des zweiten Knotens (27) zu verwalten, **gekennzeichnet durch**,
bei einer Schnittstelle (26) zwischen dem ersten Multimedianetzwerk (22) und dem leitungsvermittelten Telekommunikationsnetzwerk (24), ein Abbilden der Fähigkeiteninformation in eine Inband-Signalisierungsnachricht zum Transport in einem Trägerkanal innerhalb des leitungsvermittelten Telekommunikationsnetzwerks (24), und,
an einer Schnittstelle (28) zwischen dem leitungsvermittelten Telekommunikationsnetzwerk (24) und dem zweiten Multimedianetzwerk (23), ein Entfernen der Fähigkeiteninformation von innerhalb der Inband-Signalisierungsnachricht zum Übertragen an den zweiten Knoten (27).

2. Verfahren nach Anspruch 1, wobei das leitungsvermittelte Telekommunikationsnetzwerk (24) auf SS7 basiert.

3. Verfahren nach Anspruch 1, wobei das leitungsvermittelte Telekommunikationsnetzwerk (24) auf einer Anrufssteuerung basiert, die nicht an einen darunter liegenden Benutzerebenentransport gebunden ist, wie z. B. ein Bearer-Independent-Call-Control-(BICC) Netzwerk.

4. Verfahren nach Anspruch 2, wobei die Inband-Signalisierungsnachricht dem GSM-Tandem-Free-Operation-(TFO) Inband-Signalisierungs-Protokoll entspricht.

5. Verfahren nach Anspruch 4, wobei die Inband-Signalisierungsnachricht eine TFO-Nachricht ist.

6. Verfahren nach Anspruch 1, wobei die Fähigkeiteninformation Information umfasst, die die Fähigkeiten eines oder mehr der Knoten (25, 27) charakterisiert, Informationsströme zu senden oder zu empfangen.

7. Verfahren nach Anspruch 1, wobei der Betrieb von wenigstens einem von den ersten (22) und zweiten (23) Multimedianetzwerken auf einer ITU-T-Empfehlung H323 basiert.

8. Verfahren nach Anspruch 1, wobei der Betrieb von wenigstens einem von den ersten (22) und zweiten (23) Multimedianetzwerken auf dem IETF-RFC-2543-Sitzungsinitiierungsprotokoll basiert.

9. System (200) zum Austauschen von Fähigkeiteninformation zwischen einem ersten Knoten (25) in einem ersten Multimedianetzwerk (22) und einem zweiten Knoten (27) in einem zweiten Multimedianetzwerk (23), wobei die ersten (22) und zweiten (23) Multimedianetzwerke durch ein leitungsvermitteltes
Telekommunikationstransitnetzwerk (24) getrennt sind, über welches Fähigkeiteninformation zwischen den ersten (25) und zweiten (27) Knoten transportiert wird, wobei das System (200) umfasst:
Mittel zum Übertragen einer Steuerungsnachricht, die Fähigkeiteninformation enthält, die dafür vorgesehen ist, den Betrieb des zweiten Knotens (27) zu verwalten, von dem ersten Multimedianetzwerk (22) zu dem leitungsvermittelten Telekommunikationsnetzwerk (24), **gekennzeichnet durch**
Mittel zum Abbilden der Fähigkeiteninformation, an einer Schnittstelle (26) zwischen dem ersten Multimedianetzwerk (22) und dem leitungsvermittelten Telekommunikationsnetzwerk (24), in eine Inband-Signalisierungsnachricht zum Transport in einem Trägerkanal, innerhalb des leitungsvermittelten Telekommunikationsnetzwerks (24), und
Mittel zum Entfernen der Fähigkeiteninformation, an der Schnittstelle (28) zwischen dem leitungsvermittelten Telekommunikationsnetzwerk (24) und dem zweiten Multimedianetzwerk (23), von innerhalb der Inband-Signalisierungsnachricht, zur Übertragung an den zweiten Knoten (27).

10. System nach Anspruch 9, wobei die Fähigkeiteninformations-Abbildungs- und EntfernungsMittel durch ein oder mehr Gateways (26, 28), Media-Gateways, Ratenanpassungseinheiten oder Interworkingeinheiten bereitgestellt werden, die die ersten (22) und zweiten (23) Multimedianetzwerke mit dem leitungsvermittelten Telekommunikationsnetzwerk (24) verbinden.

## Revendications

1. Procédé d'échange d'informations de capacité entre un premier noeud (25) dans un premier réseau multimédia (22) et un second noeud (27) dans un second réseau multimédia (23), lesdits premier (22) et second (23) réseaux multimédias étant séparés par un réseau de transit de télécommunications par commutation de circuits (24) sur lequel sont transportées des informations de capacité entre ledit premier noeud (25) et ledit second noeud (27), le procédé comprenant l'étape consistant à :
émettre entre ledit premier réseau multimédia (22) et ledit réseau de transit de télécommunications par commutation de circuits (24) un message de commande contenant des informations de capacité destinées à gouverner le fonctionnement dudit second noeud (27) ;
**caractérisé par** les étapes consistant à :
sur une interface (26) entre ledit premier réseau multimédia (22) et ledit réseau de transit de télécommunications par commutation de circuits (24), placer lesdites informations de capacité dans un message de signalisation dans la bande en vue de son transport sur un canal de transport au sein dudit réseau de transit de télécommunications par commutation de circuits (24) ; et
sur une interface (28) entre ledit réseau de transit de télécommunications par commutation de circuits (24) et ledit second réseau multimédia (23), extraire lesdites informations de capacité dudit message de signalisation dans la bande en vue de leur émission vers ledit second noeud (27).

2. Procédé selon la revendication 1, dans lequel le réseau de transit de télécommunications par commutation de circuits (24) est fondé sur la norme SS7.

3. Procédé selon la revendication 1, dans lequel le réseau de transit de télécommunications par commutation de circuits (24) est fondé sur le fait que la commande de l'appel n'est pas liée à un transport sous-jacent dans le plan utilisateur, par exemple un réseau à commande de l'appel indépendante du support de transport (BICC).

4. Procédé selon la revendication 2, dans lequel le message de signalisation dans la bande est conforme au protocole de signalisation dans la bande avec fonctionnement sans tandem GSM (TFO).

5. Procédé selon la revendication 4, dans lequel le message de signalisation dans la bande est un message TFO.

6. Procédé selon la revendication 1, dans lequel les informations de capacité comprennent des informations qui caractérisent les capacités d'émission ou de réception de flux d'informations qui sont offertes par un ou plusieurs desdits noeuds (25, 27).

7. Procédé selon la revendication 1, dans lequel le fonctionnement d'au moins un desdits premier (22) et second (23) réseaux multimédia est fondé sur la Recommandation H323 de l'UlT-T.

8. Procédé selon la revendication 1, dans lequel le fonctionnement d'au moins un desdits premier (22) et second (23) réseaux multimédia est fondé sur le protocole d'initialisation de session RFC 2543 de l'IETF.

9. Système (200) d'échange d'informations de capacité entre un premier noeud (25) dans un premier réseau multimédia (22) et un second noeud (27) dans un second réseau multimédia (23), lesdits premier (22) et second (23) réseaux multimédias étant séparés par un réseau de transit de télécommunications par commutation de circuits (24) sur lequel sont transportées des informations de capacité entre ledit premier noeud (25) et ledit second noeud (27), le système (200) comprenant :
un moyen destiné à émettre un message de commande contenant des informations de capacité destinées à gouverner le fonctionnement dudit second noeud (27), entre ledit premier réseau multimédia (22) et ledit réseau de transit de télécommunications par commutation de circuits (24) ;
**caractérisé par** :
un moyen destiné à placer lesdites informations de capacité, sur une interface (26) entre ledit premier réseau multimédia (22) et ledit réseau de transit de télécommunications par commutation de circuits (24), dans un message de signalisation dans la bande en vue de son transport sur un canal de transport au sein dudit réseau de transit de télécommunications par commutation de circuits (24) ; et
un moyen destiné à extraire lesdites informations de capacité dudit message de signalisation dans la bande en vue de leur émission vers ledit second noeud (27), sur l'interface (28) entre ledit réseau de transit de télécommunications par commutation de circuits (24) et ledit second réseau multimédia (23).

10. Système selon la revendication 9, dans lequel les moyens de placement et d'extraction des informations de capacité sont fournis par une ou plusieurs passerelles (26, 28), passerelles multimédias, unités d'adaptation de débit ou unités d'interfonctionnement qui interconnectent lesdits premier (22) et second (23) réseaux multimédias avec ledit réseau de transit de télécommunications par commutation de circuits (24).
